(19)

**Europäisches Patentamt**
**European Patent Office**
**Office européen des brevets**

(11) **EP 4 703 953 A1**

(12) **EUROPEAN PATENT APPLICATION**

(43) Date of publication:
 **04.03.2026 Bulletin 2026/10**

(21) Application number: **25196482.1**

(22) Date of filing: **18.08.2025**

(51) International Patent Classification (IPC):
 *G06F 30/17* (2020.01)

(52) Cooperative Patent Classification (CPC):
 **G06F 30/17;** G06F 2111/06; G06F 2113/22;
 G06F 2119/14; G06F 2119/18

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH LA MA MD TN**

(30) Priority: **29.08.2024 IN 202421065326**

(71) Applicant: **Tata Consultancy Services Limited
 Maharashtra (IN)**

(72) Inventors:
 • **JHA, Ish Kumar
 Pune, Maharashtra 411057 (IN)**
 • **ARDHAM, Surya
 Hyderabad, Telangana 500034 (IN)**
 • **TENNYSON, Gerald
 Pune, Maharashtra 411057 (IN)**

(74) Representative: **Goddar, Heinz J.
 Boehmert & Boehmert
 Anwaltspartnerschaft mbB
 Pettenkoferstrasse 22
 80336 München (DE)**

(54) **METHOD AND SYSTEM OF GENERATING PREFORM DESIGN FOR SINGLE STAGE HOT FORGING OF METALS**

(57) Preform design is a crucial step in hot forging of metals. Embodiments of present disclosure provide a method and system of generating preform design for single stage hot forging of metals. The method optimizes the preform geometry using three key aspects: geometry, grain size, and forging force by a multi-objective optimization technique. Initially, parameters of a preform of a product and a single stage hot forging press are obtained which are used to generate initial set of geometric variations of the preform using a multi-objective optimization technique. This set is refined iteratively for a predefined number of iterations. At each iteration, a fitness value associated with each geometric variation is computed based on geometry, grain size, and force fitness value, and a new set of geometric variations are generated based on the fitness value which is used in the next iteration.

200

Obtaining a plurality of parameters of a preform of a product and a single stage hot forging press — 202

Generating a plurality of geometric variations of the preform of the product based on the plurality of parameters using a multi-objective optimization technique — 204

Iteratively performing a plurality of steps for a predefined number of iterations, wherein the plurality of steps comprise: — 206

Computing a fitness value associated with each of the plurality of geometric variations, wherein the fitness value is a function of a geometry fitness value, a grain size fitness value, and a force fitness value — 206A

Generating a new set of geometric variations of the preform of the product using a plurality of selected geometric variations from among the plurality of geometric variations based on the associated fitness value, wherein the new set of geometric variations is used in subsequent iterations, and wherein a geometric variation is selected as preform design, from among the new set of geometric variations obtained after performing predefined number of iterations, based on the associated fitness value — 206B

FIG. 2

Processed by Luminess, 75001 PARIS (FR)

EP 4 703 953 A1

**Description**

CROSS-REFERENCE TO RELATED APPLICATIONS AND PRIORITY

The present application claims priority to Indian application no. 202421065326, filed on August 29, 2024.

TECHNICAL FIELD

The present invention generally relates to the field of hot forging of metals, and, more particularly, to a method and system of generating preform design for single stage hot forging of metals.

BACKGROUND

Hot forging is a widely used technique to shape metal parts (alternately referred to as product, component, or end product) by heating the metal to a high temperature, which makes it softer and easier to mold. Hot forging involves preparing preform (initial shape) of the metal part, heating the preform, forging the shape and finally trimming and finishing the metal part. It is essential to prepare the preform in such a way that it can be easily forged into the desired shape of the product. The preform geometry dictates not only the final quality of the forged product achieved under the capacity of the hot forging press but also optimizes the preform production process such as casting and cross-wedge rolling. However, the preform design process is very complex and iterative in nature because of the following reasons: i) preform geometry should be designed to eliminate defects like underfilling and excessive flash, ensuring the quality of the final forged component, ii) strain distribution in the forged component must align with the final grain size of the forged product achieved within the hot forging press capacity, and iii) geometrical complexity of the preform should be minimized to facilitate cost-effective manufacturing with minimal energy utilization across all participating processes and without compromising quality. These considerations collectively make the preform design process intricate and iterative in nature. Existing techniques available in the art have following drawbacks: i) they are designed specific to certain products, ii) they optimize only some of the objectives of preform design by considering some of the parameters of preform such as geometry while other parameters such as material properties, forging press parameters are ignored, and iii) they are applicable to multi-stage hot forging process which is time consuming.

SUMMARY

Embodiments of the present disclosure present technological improvements as solutions to one or more of the above-mentioned technical problems recognized by the inventors in conventional systems. For example, in one embodiment, a method of generating preform design for single stage hot forging of metals is provided. The method includes obtaining a plurality of parameters of a preform of a product and a single stage hot forging press. Further, the method includes generating a plurality of geometric variations of the preform of the product based on the plurality of parameters using a multi-objective optimization technique. The method further includes iteratively performing a plurality of steps for a predefined number of iterations. The plurality of steps comprise computing a fitness value associated with each of the plurality of geometric variations. The fitness value is a function of a geometry fitness value, a grain size fitness value, and a force fitness value. Further the plurality of steps comprise generating a new set of geometric variations of the preform of the product using a plurality of selected geometric variations from among the plurality of geometric variations based on the associated fitness value. The new set of geometric variations is used in subsequent iterations. A geometric variation is selected as preform design, from among the new set of geometric variations obtained after performing predefined number of iterations, based on the associated fitness value.

In another aspect, a system for identification of generating preform design for single stage hot forging of metals is provided. The system includes: a memory storing instructions; one or more communication interfaces; and one or more hardware processors coupled to the memory via the one or more communication interfaces, wherein the one or more hardware processors are configured by the instructions to obtain a plurality of parameters of a preform of a product and a single stage hot forging press. Further, the one or more hardware processors are configured by the instructions to generate a plurality of geometric variations of the preform of the product based on the plurality of parameters using a multi-objective optimization technique. The one or more hardware processors are configured by the instructions to iteratively perform a plurality of steps for a predefined number of iterations. The plurality of steps comprise computing a fitness value associated with each of the plurality of geometric variations. The fitness value is a function of a geometry fitness value, a grain size fitness value, and a force fitness value. Further the plurality of steps comprise generating a new set of geometric variations of the preform of the product using a plurality of selected geometric variations from among the plurality of geometric variations based on the associated fitness value. The new set of geometric variations is used in subsequent iterations. A geometric variation is selected as preform design, from among the new set of geometric variations obtained after performing predefined number of iterations, based on the associated fitness value.

In yet another aspect, there are provided one or more non-transitory machine-readable information storage mediums comprising one or more instructions which when executed by one or more hardware processors cause a method of generating preform design for single stage hot forging of metals. The method includes obtaining a plurality of parameters of a preform of a product and a single stage hot forging press. Further, the method includes generating a plurality of geometric variations of the preform of the product based on the plurality of parameters using a multi-objective optimization technique. The method further includes iteratively performing a plurality of steps for a predefined number of iterations. The plurality of steps comprise computing a fitness value associated with each of the plurality of geometric variations. The fitness value is a function of a geometry fitness value, a grain size fitness value, and a force fitness value. Further the plurality of steps comprise generating a new set of geometric variations of the preform of the product using a plurality of selected geometric variations from among the plurality of geometric variations based on the associated fitness value. The new set of geometric variations is used in subsequent iterations. A geometric variation is selected as preform design, from among the new set of geometric variations obtained after performing predefined number of iterations, based on the associated fitness value.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system of generating preform design for single stage hot forging of metals, according to some embodiments of the present disclosure.

FIG. 2 is a flow diagram illustrating a method of generating preform design for single stage hot forging of metals, according to some embodiments of the present disclosure.

FIG. 3 illustrates an example implementation of method of FIG. 2 using Non-dominated Sorting Genetic Algorithm (NSGA-II) as multi-objective optimization technique, according to some embodiments of the present disclosure.

FIG. 4 is a flowchart illustrating computation of geometric fitness value in geometry module, according to some embodiments of the present disclosure.

FIG. 5 illustrates a plurality of sections of an example preform used in geometrical complexity calculations, according to some embodiments of the present disclosure.

FIG. 6 is a flowchart illustrating computation of grain size fitness value in grain size module, according to some embodiments of the present disclosure.

FIG. 7 illustrates a grain size distribution in the plurality of sections of the example preform, according to some embodiments of the present disclosure.

FIG. 8 is a flowchart illustrating computation of force fitness value in force module, according to some embodiments of the present disclosure.

FIGS. 9A and 9B show a model of an electrical tension rod (product) and its associated dimensions across a plurality of sections, respectively, according to some embodiments of the present disclosure.

FIGS. 10A, 10B, 10C, 10D, and 10E illustrate change in (a) grain size RMSE (Root Mean Square Error), (b) complexity, (c) forging force, (d) fitness value, (e) preform geometry, respectively, with iterations while performing method of FIG. 3, according to some embodiments of the present disclosure.

FIGS. 11A and 11B illustrates comparison between the final product shown in FIG. 9A and dimensions of a preform of the product generated using method of FIG. 3, according to some embodiments of the present disclosure.

FIGS. 12A, 12B and 12C illustrate comparison between (a) required and achieved grain size distribution, (b) final geometry and preform geometry and (c) hot forging capacity and forging force required, respectively, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the terms 'product,' 'products,' 'part,' 'end product,' 'final product' are interchangeably used throughout the detailed description and mean a metal object. The term 'hot forging' is defined as a metal shaping process in which a malleable metal part, known as a billet or workpiece, is worked to a predetermined shape by one or more processes such as hammering, upsetting, pressing and so forth where the workpiece is heated up to about 75% of its melting temperature. The process begins with a cast ingot, which is heated to its plastic deformation temperature, then forged between dies to the desired shape and size. During this forging process, the cast, coarse grain structure is broken up and replaced by finer grains, achieved through the size reduction of the ingot. In single stage hot forging process, the workpiece is heated and deformed in a single step to achieve the desired shape whereas multistage hot forging involves multiple heating and deforming steps. The term 'preform' refers to the billet or workpiece which is subjected to the hot forging process to obtain a final product. It is essential to prepare the preform in such a way that it can be easily forged into the desired shape of the product. The preform geometry dictates not only the final quality of the forged product achieved under the capacity of the hot forging press but also optimizes the preform production process such as casting and cross-wedge rolling.

Single stage hot forging is a complex task due to various process parameters like forging temperature, strain rate, preform geometry, and hot forging press capacity. There are also different target objectives, such as achieving less complicated preform geometry, avoiding underfilling and excessive flash volume, maintaining the required strain distribution in the final geometry, and ensuring that hot forging of preform is within the capacity of the hot forging press and achieving the required grain size distribution as required by the final product. Managing all these parameters and objectives makes the single stage hot forging process iterative and intricate to achieve the desired properties. The design of the preform geometry plays a crucial role in addressing many target objectives, including avoiding underfilling and excessive flash volume, achieving the required strain distribution in the final product, achieving target grain size distribution, and ensuring that preform is forgeable within the press capacity. Hence, designing the preform geometry is not trivial as it requires considering all these objectives, leading to an iterative design process that increases production time and cost. Existing techniques available in the art have following drawbacks: i) they are designed specific to certain products, ii) they optimize only some of the above-mentioned objectives by considering some of the parameters of preform such as geometry while other parameters such as material properties, forging press parameters and grain size distribution are ignored, and iii) they are applicable to multistage hot forging process and are not specifically designed or easily applied for single stage hot forging.

Hence, embodiments of present disclosure provide a method and system of generating preform design for single stage hot forging of metals. The method optimizes the preform design using three key aspects: geometry, grain size, and force by a multi-objective optimization technique. Initially, parameters of a preform of a product and a single stage hot forging press are obtained which are used to generate initial set of geometric variations of the preform using a multi-objective optimization technique. The initial set of geometric variations are refined iteratively for a predefined number of iterations. At each iteration, a fitness value associated with each geometric variation is computed a function of a geometry fitness value, a grain size fitness value, and a force fitness value, and a new set of geometric variations are generated based on the fitness value which is used in the next iteration. At the end of this iterative process, one geometric variation is selected as preform design based on its fitness value. The geometry fitness value and the grain size fitness value are calculated using a sectioning-based approach to control and achieve the required geometry and grain size distribution across all the sections of the final product. The preform design generated by embodiments of present disclosure is simple, minimizes underfilling and excessive flash volume defects, achieves desired grain size distribution, and ensures compatibility with the hot forging press's capabilities.

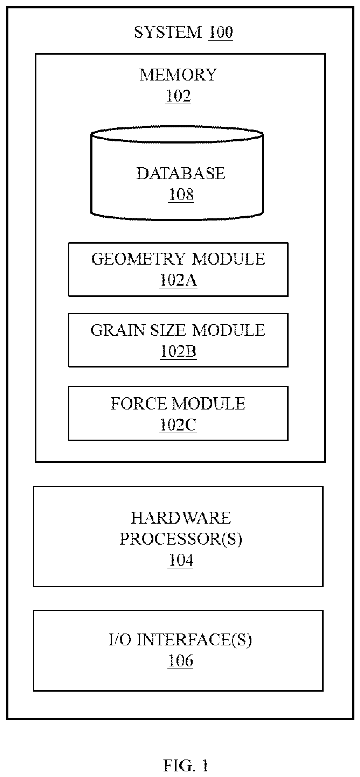

Referring now to the drawings, and more particularly to FIGS. 1 to 12C, where similar reference characters denote corresponding features consistently throughout the figures, there are shown preferred embodiments, and these embodiments are described in the context of the following exemplary system and/or method.

FIG. 1 illustrates an exemplary block diagram of a system of generating preform design for single stage hot forging of metals, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

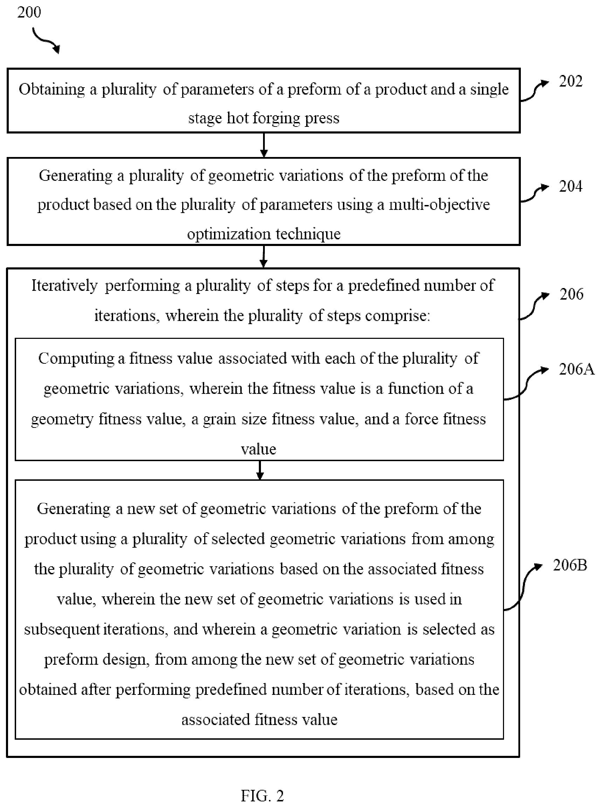

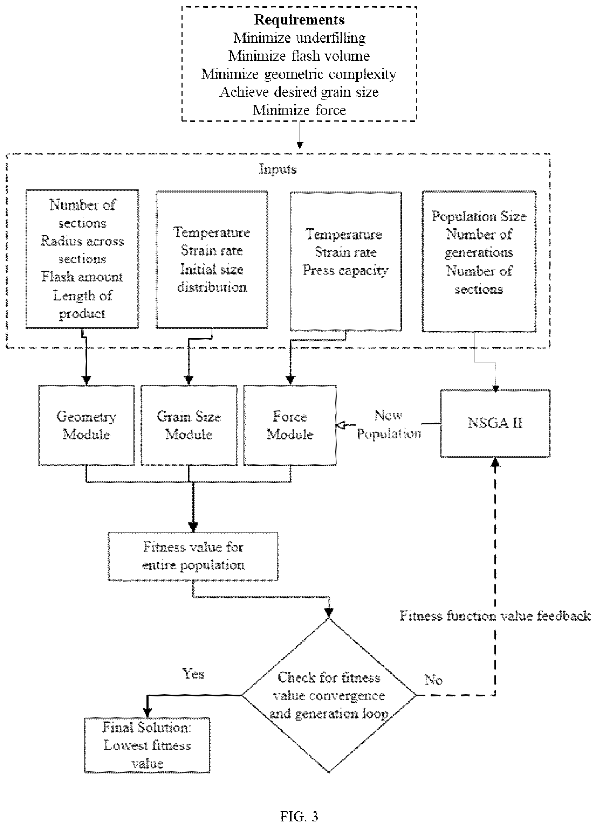

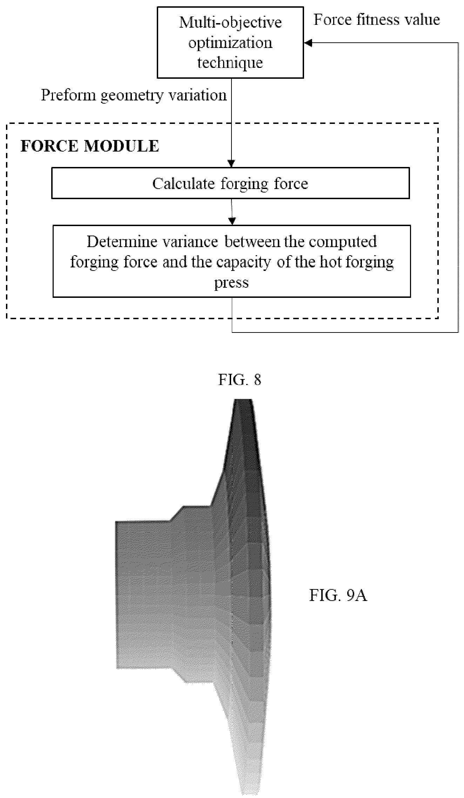

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The memory 102 comprises a plurality of modules including geometry module 102A, grain size module 102B, and force module 102C which store instructions for calculating geometry fitness value, grain size fitness value and force fitness value, respectively. The database 108 stores information pertaining to inputs fed to the system 100 and/or outputs generated by the system (e.g., at each stage), specific to the methodology described herein. Functions of the components of system 100 are explained in conjunction with flow diagrams depicted in FIGS. 2, 4, 6, and 8, examples illustrated in FIGS. 3, 5 and 7, and experimental results illustrated in FIGS. 9A to 12C for generating preform design for single stage hot forging of metals.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the steps of flow diagram depicted in flow diagrams of FIGS. 2, 4, 6, and 8, examples illustrated in FIGS. 3, 5 and 7, and experimental results illustrated in FIGS. 9A to 12C for generating preform design for single stage hot forging of metals. Although process steps, method steps, techniques or the like may be described in a sequential order, such processes, methods, and techniques may be configured to work in alternate orders. **In** other words, any sequence or order of steps that may be described does not necessarily indicate a requirement that the steps be performed in that order. The steps of processes described herein may be performed in any order practical. Further, some steps may be performed simultaneously.

FIG. 2 is a flow diagram illustrating a method of generating preform design for single stage hot forging of metals, according to some embodiments of the present disclosure. At step 202, the one or more hardware processors 104 are configured to obtain a plurality of parameters of a preform of a product and a single stage hot forging press. The plurality of parameters comprise i) length of the product, ii) a plurality of sections $x_i$ comprised in the preform, iii) radius of each of the plurality of sections, iv) an initial grain size distribution of material of the preform, v) a target grain size distribution of material of the product, vi) strain rate for single stage hot forging, vii) a strain within the preform, viii) a forging temperature, and ix) capacity of a hot forging press. Further, at step 204 of the method 200, the one or more hardware processors 104 are configured to generate a plurality of geometric variations of the preform of the product based on the plurality of parameters using a multi-objective optimization technique. In an embodiment, the multi-objective optimization technique is Non-dominated Sorting Genetic Algorithm (NSGA-II) whose implementation is explained in detail using FIG. 3. Different multi-objective optimization techniques such as Multi-Objective Particle Swarm Optimization (MOPSO), Multi-Objective Bayesian Optimization (MOBO), Genetic Algorithm (GA), etc. can be used in different embodiments.

Once the plurality of geometric variations of the preform of the product are generated, at step 206 of the method 200, the one or more hardware processors 104 are configured to iteratively perform steps 206A and 206B for a predefined number of iterations. At step 206A, a fitness value associated with each of the plurality of geometric variations is computed as a function of a geometry fitness value, a grain size fitness value, and a force fitness value which are determined by the geometry module 102A, the grain size module 102B and the force module 102C, respectively. The geometry module 102A targets removal of underfilling and excessive flash volume defects from the product to save on raw material costs and simplify the geometry complexity of the preform for easier manufacturing. The grain size module 102B ensures that the grain size distributions of the preform aligns with the desired grain size distribution of the final product. The force module 102C ensures that the preform geometry is suitable for the hot forging process, staying within acceptable force constraints of the hot forging press.

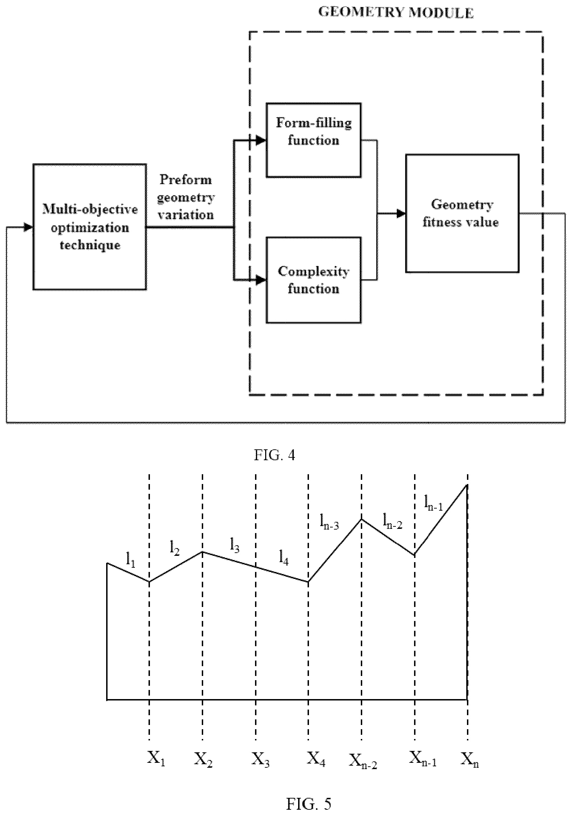

As illustrated in FIG. 4, the geometry module 102A comprises two functions: i) a form filling function to evaluate underfilling and excess flash volume, assigning an error value (referred to as form filling error) to each geometrical variation of the preform, and ii) a complexity function to assess geometric complexity of each geometrical variation of the preform, assigning a complexity value to the geometrical variation. A sectioning-based approach is used to calculate the geometry fitness value, wherein geometric complexity and form filling error are calculated separately for each of the plurality of sections $x_i$ comprised in the preform (as illustrated in FIG. 5) and then these values are aggregated across the plurality of sections. The complexity C of the geometry is determined as a sum of geometrical complexities of each of the plurality of sections according to equation 1.

$$C = \sum_{i=1}^{n-1} \sqrt{(l_i)^2 + \frac{L}{n-1}} \qquad \dots (1)$$

In equation 1, $C$ is complexity of the geometry, $l_i$ is length of each section which is calculated as $r_{xi} - r_{xi+1}$ wherein $r_{xi}$ is y-coordinate of end point of section $x_i$, $L$ is the length of the final product and $n$ is the number of sections in the preform. The complexity $C$ is passed as a return value from the complexity function. The form filling error $F^{xi}$ for each of the plurality of sections is calculated according to equation 2, wherein $a$ is a predefined value representing material surplus necessary for complete die filling operation and is defined for the entire preform of the product, $A_p^{x_i}$ is area of the geometry at the section

$x_i$, and $A_{fp}^{x_i}$ is the area of the product at the section $x_i$.

$$F^{x_i} = \begin{cases} 0, if \ \frac{A_p^{x_i}}{A_{fp}^{x_i}} < a \\ 1, if \ \frac{A_p^{x_i}}{A_{fp}^{x_i}} > (1+a) \\ -a + \frac{A_p^{x_i}}{A_{fp}^{x_i}}, if \ a \le \frac{A_p^{x_i}}{A_{fp}^{x_i}} < (1+a) \end{cases} \qquad \ldots\ldots (2)$$

Finally, the geometrical fitness value $M_v^{Geometry}$ is determined as sum of the complexity $C$ of the geometry and the form filling error $F^{xi}$ of the plurality of sections according to equation 3.

$$M_v^{Geometry}{}_i = \sum_{i=1}^{n} F^{x_i} + C \qquad \ldots\ldots (3)$$

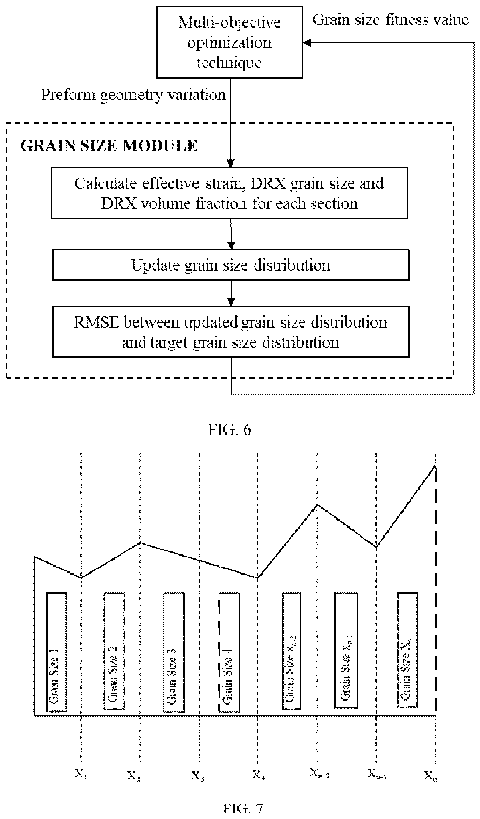

The grain size fitness value for a geometry of the preform from among the plurality of geometric variations of the preform is obtained by using the grain size module 102B as illustrated in FIG. 6. In order to determine the grain size fitness value, a sectioning-based approach similar to the one followed in geometry module is used, wherein grain size distribution at each section is determined (as illustrated in FIG. 7) and then these values are aggregated across the plurality of sections. Initially, an effective strain at each section of the preform during hot forging into the final product is calculated. Then, dynamic recrystallization (DRX) area fraction and DRX grain size are determined based on the calculated effective strain. Next, the initial grain size distribution is updated based on the DRX area fraction and DRX grain size to obtain an updated grain size distribution according to equation 4.

$$GrainSize^{x_i} = \left( DRX_{af}^{x_i} \times DRX_{gs}^{x_i} \right) + (1 - DRX_{af}^{x_i}) \times A_{fp}^{x_i} \qquad \ldots\ldots (4)$$

In equation 4, $GrainSize^{xi}$ is grain size at section $x_i$ of the geometry of the preform, $DRX_{af}^{x_i}$ is DRX area fraction at section $x_i$, $DRX_{gs}^{x_i}$ is DRX grain size at section $x_i$ and $A_{fp}^{x_i}$ is the area of the final product at section $x_i$. Finally, Root Mean Squared Error (RMSE) between the updated grain size distribution and the target grain size distribution is calculated according to equation 5. The calculated error is the grain size fitness value $M_v^{Grain\ Size}$.

$$M_v^{GrainSize} = RMSE(obtained\ grain\ size, target\ grain\ size) \ \ldots\ldots (5)$$

The force fitness value is calculated by using the force module 102C. This module is designed to calculate the hot forging force necessary to transform the preform into the final product. Optimization of the preform geometry is carried out in such a way that the required forging force for deforming the preform to its final geometry remains within the capacity of the hot forging press. FIG. 8 is a flowchart illustrating computation of force fitness value in the force module 102C, according to some embodiments of the present disclosure. Firstly, a forging force necessary to transform the geometry of the preform into the final product is computed based on i) a flow stress ($y_f$), ii) contact area $(A)$, and iii) coefficient of friction ($\mu$) between die of the hot forging press and material of the preform according to equation 6.

$$F = y_f * A * (1 + \frac{\mu * length}{3 * width}) \qquad \ldots\ldots (6)$$

The flow stress $y_f$ is determined based on the forging temperature, the strain rate for single stage hot forging, and the strain within the preform. The contact area $A$ is calculated by multiplying the length of the product and width between the preform and the die of the hot forging press. After calculating the forging force, it is compared against the capacity of the hot forging

press ($C_p$) according to equation 7. The variance between the forging force and the press capacity is then utilized as the force fitness value, denoted as $M_v^{Force}$ .

$$M_v^{Force} = (F - C_p) \qquad \ldots\ldots (7)$$

Once the geometry fitness value, the grain size fitness value and the force fitness value are determined, the fitness value associated with the geometrical variation is calculated as a function of these three values according to equation 8. The function $f^n$ can be defined as per the requirement. For example, the function is a weighted sum of the geometry fitness value, the grain size fitness value, and the force fitness value. The weights are 1 by default, hence fitness value is determined according to equation 9. Suppose for a certain product, grain size parameter is more important than geometry and force, then a higher weightage (2) is assigned to the grain size fitness value. So, the fitness value is determined according to equation 10.

$$Fv_i = f^n\left(M_v^{Geometry}, M_v^{Grain\ Size}, M_v^{Force}\right) \qquad \ldots\ldots (8)$$

$$Fv_i = M_v^{Geometry} + M_v^{Grain\ Size} + M_v^{Force} \qquad \ldots\ldots (9)$$

$$Fv_i = M_v^{Geometry} + 2 \times M_v^{Grain\ Size} + M_v^{Force} \qquad \ldots\ldots (10)$$

In an embodiment, the geometry, grain size and the force fitness values maybe normalized if they are at different scales. Normalizing guarantees that each individual module contributes equally by default. In another embodiment, different weights may be assigned to the geometry, the grain size and the force fitness values based on specific requirements. For instance, if the grain size module is prioritized to produce an extremely low RMSE value, its weight is increased accordingly. This allows fine-tuning the importance of each module in the overall fitness evaluation process, tailoring it to desired optimization goals.

Once the fitness values of each of the plurality of geometrical variations of the preform are computed, at step 206B, a new set of geometric variations of the preform of the product is generated using a plurality of selected geometric variations from among the plurality of geometric variations based on the associated fitness value. The plurality of geometric variations may be ranked in a specific order (ascending or descending order depending on the multi-objective optimization technique used) and top n geometric variations are selected as the new set of geometric variations. This new set of geometric variations is used in subsequent iterations. Once the predefined number of iterations are completed, a geometric variation is selected as preform design, from among the new set of geometric variations obtained after performing predefined number of iterations, based on the associated fitness value. The selected preform design satisfies the objectives of minimum underfilling, reduction in flash volume, minimal geometry complexity, and ensures desired grain size of the final forged product. Also, the geometry of the selected preform is such that the contour of its surface is simple and smooth without any turfs and valley which ensures easy manufacturability of the product. Since parameters of the hot forging press are considered while optimizing the preform geometry, the selected preform improves hot forging equipment life and ensures minimized energy consumption across all the participating processes. Thus, the embodiments of present disclosure optimizes the preform geometry to satisfy all the requirements from the quality and cost consideration under one umbrella and simplifies the overall preform design process for single stage hot forging in metals.

FIG. 3 illustrates an example implementation of method of FIG. 2 using Non-dominated Sorting Genetic Algorithm (NSGA-II) as multi-objective optimization technique, according to some embodiments of the present disclosure. Initially, input data and requirements are obtained. The input data comprises crucial parameters such as hot forging temperature, deformation strain rate, hot forging capacity, desired final product geometry i.e., length, width, and cross-sectional area as well as initial and target grain size distribution in the preform material and final product, respectively. The requirements include minimizing underfilling, minimizing flash volume, minimize geometrical complexity, achieve desired grain size, and minimize force. This input data is fed into the NSGA II algorithm along with the specification of the number of sections into which the preform is segmented, determined by the length, complexity of the final component geometry and required grain size distribution. Subsequently, the NSGA II algorithm generates a first population of preform geometries, each representing a unique preform design. Each individual geometry (also referred as chromosome) in this population is assigned random radius values for each section within the specified range. This population, exhibiting a range of geometry variations, is then forwarded to the geometry, grain size, and force modules for analysis. Each geometry within the population undergoes evaluation within the geometry, grain size, and force modules, yielding a geometry, grain size, and

EP 4 703 953 A1

force fitness value for every instance which are aggregated to obtain a fitness value. Based on this fitness value, the geometries are ranked, with the lowest fitness value indicating the optimal solution for that generation. If the predefined number of generations specified in the NSGA II algorithm has been reached, the optimized solution is proposed. Otherwise, a new population is generated based on the best-performing candidate geometries from the previous generation, by considering factors like non-dominance and crowding distance. To generate the second population, a set of parent individuals is selected from the first population based on their fitness values and crowding distance. This selection ensures that the best geometries are chosen while maintaining a diverse set of geometries. The selected parent geometries are used to create the next population through crossover and mutation. During crossover, segments of sections are interchanged between pairs of parent geometries. In the mutation step, the radius value of parent geometries are randomly changed. This is performed iteratively until the generation loop reaches its maximum value (i.e., predefined number of iterations are completed), at which point an optimized Pareto solution is proposed. This solution is an optimized preform geometry that satisfies the given requirements such as the target grain size distribution, reduced underfilling or excess volume defects in final product, reduced geometrical complexity of preform, and forging force within the capacity of the hot forging press.

EXPERIMENTS AND RESULTS

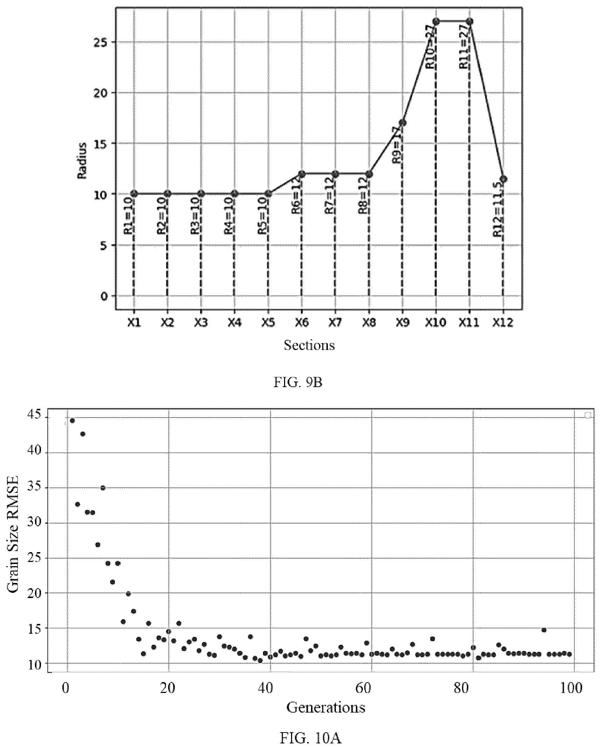

The method 200 was implemented for designing the preform of an electrical tension rod, used in high-voltage transmission tower, as depicted in FIG. 9A by using NSGA II technique as described in FIG. 3. The preform must meet specific requirements including- it should have ultimate tensile strength of about 1200MPa, especially near the head area, to withstand tensile load induced by electrical cables, be resistant to corrosion, and withstand high temperatures. Once designed, the optimized preform will be forged using a single stage hot forging press to achieve the desired final shape and properties. To achieve this, the target objectives are set as minimizing underfilling and excessive flash volume defects, desired grain size distribution, a simpler preform design, and ensuring compatibility with the hot forging press's capabilities. Important hot forging parameters like temperature and the rate of deformation are also considered. FIG. 9B illustrates dimensions of the electrical tension rod of FIG. 9A wherein the entire product geometry is divided into 12 sections for analysis and design optimization. The goals and specific parameters for hot forging are detailed in Table 1 and Table 2, respectively. These objectives and parameters are obtained as input to the method 200. The material chosen for the electrical rod is Inconel 718 (IN718) because it meets the requirements for high temperature resistance and corrosion resistance.

Table 1

| S.No. | Targets | Value |
|---|---|---|
| 1. | Grain size distribution | 130$\mu$m for first half (X1-X6) and 90 $\mu$m for the second half (X7-X12) |
| 2. | Preform geometrical complexity | Pitch distance should be close to length of the final product which is 110 mm long |
| 3. | Forging force | below $7.8 \times 10^6 N$ |

Table 2

| S.No. | Parameters | Value |
|---|---|---|
| 1. | Strain rate | 0.5 |
| 2. | Forging Temperature | 1200K |
| 3. | Press Capacity | $7.8 \times 10^6$N |
| 4. | Flash amount | 10% |
| 5. | NSGA Population size | 1000 |
| 6. | NSGA Generations (Number of iterations) | 100 |
| 7. | Length of product | 110mm |
| 8. | Number of sections | 12 |
| 9. | Initial grain size | 150$\mu$m |
| 10. | Radius at each section | Given in FIG. 9B |

8

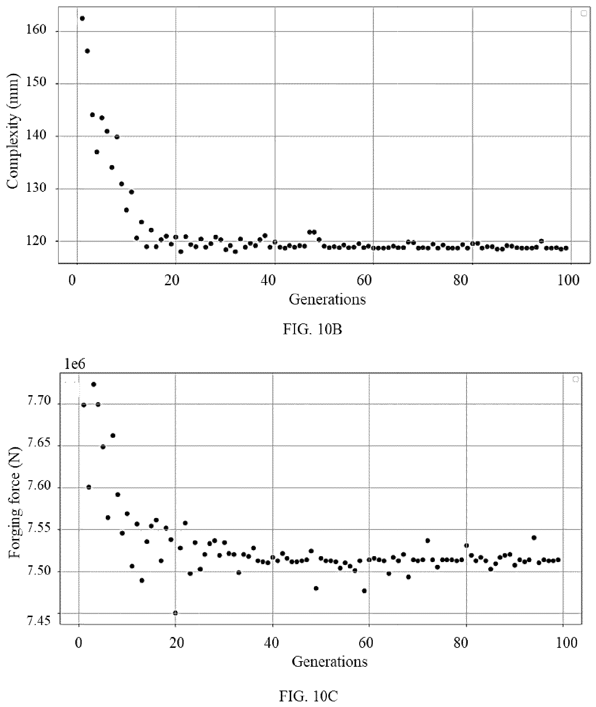

The method 200 has achieved remarkable results in optimizing the preform geometry to meet three key objectives. Firstly, by aligning the achieved grain size distribution closely with the target grain size distribution, the grain size RMSE is significantly reduced. This reduction is clearly depicted in FIG. 10A, highlighting the convergence of grain size RMSE values as the preform geometry evolves with each generation of the NSGA-II technique. Secondly, the disclosed method 200 successfully reduced the complexity of the preform geometry, as evidenced by FIG. 10B. With each generation, the complexity decreases. Lastly, in line with the target objective to minimize forging force, FIG. 10C illustrates a consistent reduction in forging force as the preform geometry evolves across generations. It has been ensured that the forging force remains below $7.8 \times 10^6 N$ (800 tonne), demonstrating the effectiveness of method 200 in optimizing the preform geometry in achieving the target objectives.

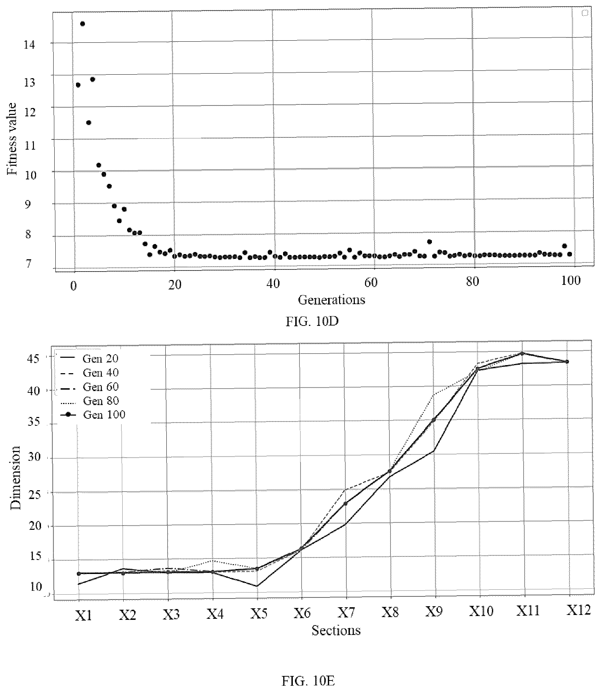

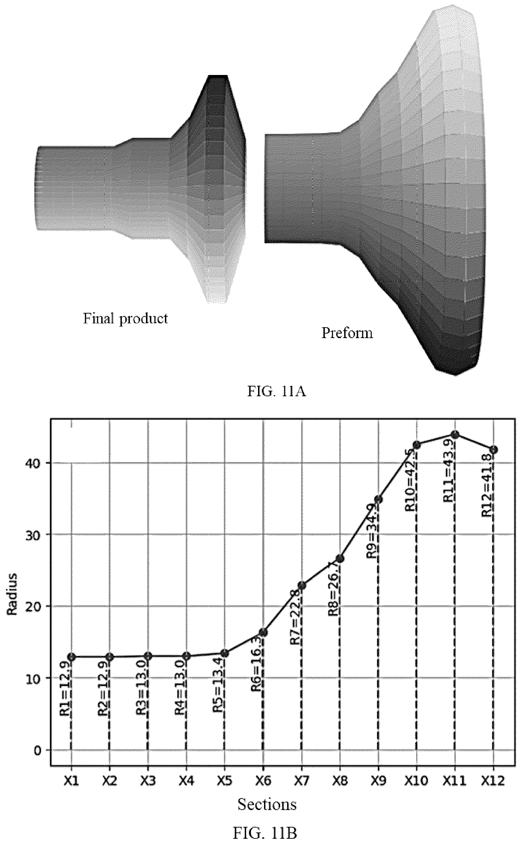

The fitness value calculated using equation 8 based on the geometry fitness value, the grain size fitness value, and the force fitness value, serves as a measure of performance in optimizing preform geometry. As depicted in FIG. 10D, a decreasing fitness value indicates the efficient optimization of the geometry by the NSGA-II algorithm. This optimization is a step-by-step process across generations, ensuring that the preform geometry meets the target requirements. Ability of method 200 to steadily decrease the fitness value with each generation highlights its effectiveness in efficiently satisfying multiple target objectives. FIG. 10E visually represents the evolution of preform geometry as the number of generations increases. Throughout this evolutionary process, the preform geometry continuously improves, ultimately achieving a geometry by the 100th generation that fulfills all the target objectives outlined in Table 1. This evolution highlights the effectiveness of method 200 in progressively refining the preform geometry to meet the specified target requirements. It demonstrates the power of iterative optimization in achieving desired outcomes. The final proposed preform geometry that satisfies all the target objectives can be seen in FIGS. 11A and 11B. Table 3 below compares initial target objectives with the achieved results. It clearly shows that the disclosed method 200 met the target objectives accurately and successfully handled diverse goals, such as achieving varying grain size along the length, maintaining lower geometrical complexity, and keeping the forging forces within limits.

Table 3

| Objectives | Target objective | Achieved results | Target Satisfied? (Yes/NO) |
|---|---|---|---|
| Grain size distribution (X1 to X12) | [130, 130, 130, 130, 130, 130, 90, 90, 90, 90, 90, 90] | [130, 130, 130, 130, 127, 126, 93, 84, 89, 110, 107, 63] | Yes (RMSE = 11.4 $\mu$m) |
| Complexity | Close to 110mm | 118.7mm | Yes |
| Forging force | Below 7.8x $10^6 N$ | $7.5 \times 10^6 N$ | Yes |

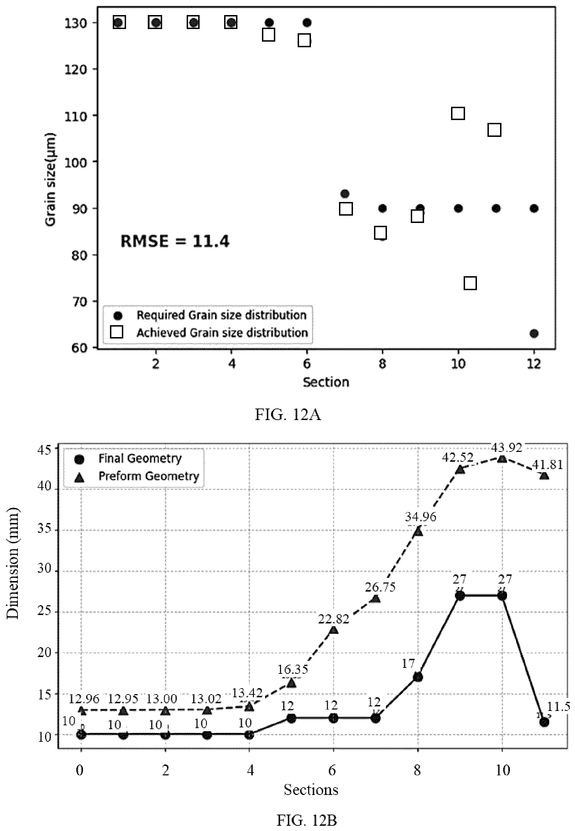

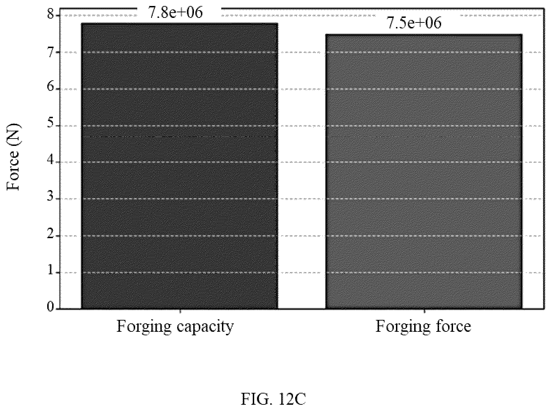

It can be observed from Table 3 that the grain size objective was met with an RMSE value of 11.4$\mu$m, well within acceptable limits. The complexity value is 118.7mm, remarkably close to the final product length. Additionally, the forging force required is $7.5 \times 10^6 N$, comfortably below the hot forging press capacity. This highlights the success of preform optimization performed by method 200 in meeting all set targets efficiently. FIGS. 12A, 12B and 12C graphically illustrate the results in Table 3, that is, comparison between (a) required and achieved grain size distribution, (b) final geometry and preform geometry and (c) hot forging capacity and forging force required, respectively, according to some embodiments of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   obtaining (202), via one or more hardware processors, a plurality of parameters of a preform of a product and a single stage hot forging press;
   generating (204), via the one or more hardware processors, a plurality of geometric variations of the preform of the product based on the plurality of parameters using a multi-objective optimization technique; and
   iteratively performing (206), via the one or more hardware processors, a plurality of steps for a predefined number of iterations, wherein the plurality of steps comprise:

   computing (206A) a fitness value associated with each of the plurality of geometric variations, wherein the fitness value is a function of a geometry fitness value, a grain size fitness value, and a force fitness value; and
   generating (206B) a new set of geometric variations of the preform of the product using a plurality of selected geometric variations from among the plurality of geometric variations based on the associated fitness value, wherein the new set of geometric variations is used in subsequent iterations, and wherein a geometric variation is selected as preform design, from among the new set of geometric variations obtained after performing predefined number of iterations, based on the associated fitness value.

2. The method as claimed in claim 1, wherein the plurality of parameters comprise i) length of the product, ii) a plurality of sections $x_i$ comprised in the preform, iii) radius of each of the plurality of sections, iv) an initial grain size distribution of material of the preform, v) a target grain size distribution of material of the product, vi) strain rate for single stage hot forging, vii) a strain within the preform, viii) a forging temperature, and ix) capacity of a hot forging press.

3. The method as claimed in claim 2, wherein the geometry fitness value for a geometry of the preform, from among the plurality of geometric variations of the preform, is obtained by:

   determining a complexity $C$ of the geometry as a sum of geometrical complexities of each of the plurality of sections calculated using the radius of each of the plurality of sections;
   calculating a form filling error $F^x$ for each of the plurality of sections as:

$$F^{x_i} = \begin{cases} 0, if \ \dfrac{A_p^{x_i}}{A_{fp}^{x_i}} < a \\[2ex] 1, if \ \dfrac{A_p^{x_i}}{A_{fp}^{x_i}} > (1+a) \\[2ex] -a + \dfrac{A_p^{x_i}}{A_{fp}^{x_i}}, if \ a \le \dfrac{A_p^{x_i}}{A_{fp}^{x_i}} < (1+a) \end{cases},$$

wherein $a$ is a predefined material surplus necessary for complete die filling operation and is defined for the entire preform of the product, $A_p^{x_i}$ is area of the geometry at the section $x_i$, and $A_{fp}^{x_i}$ is the area of the product at the section $x_i$; and

determining the geometry fitness value as sum of the complexity of the geometry and the form filling error of the plurality of sections.

4. The method as claimed in claim 2, wherein the grain size fitness value for a geometry of the preform from among the plurality of geometric variations of the preform is obtained by:

calculating an effective strain at each section of the preform during hot forging into the final product;
determining dynamic recrystallization (DRX) area fraction and DRX grain size based on the calculated effective strain;
updating the initial grain size distribution based on the DRX area fraction and DRX grain size to obtain an updated grain size distribution; and
calculating a Root Mean Squared Error (RMSE) between the updated grain size distribution and the target grain size distribution, wherein the calculated error is the grain size fitness value.

5. The method as claimed in claim 2, wherein the force fitness value for a geometry of the preform from among the plurality of geometric variations of the preform is obtained by:

computing a forging force necessary to transform the geometry of the preform into the final product based on i) a flow stress ($y_f$), ii) contact area $(A)$, and iii) coefficient of friction ($\mu$) between die of the hot forging press and material of the preform, wherein the flow stress is determined based on the forging temperature, the strain rate for single stage hot forging, and the strain within the preform, and wherein the contact area is calculated by multiplying the length of the product and width between the preform and the die of the hot forging press; and
determining variance between the computed forging force and the capacity of the hot forging press, wherein the determined variance serves as the force fitness value.

6. A system (100), comprising:

a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:

obtain a plurality of parameters of a preform of a product and a single stage hot forging press;
generate a plurality of geometric variations of the preform of the product based on the plurality of parameters using a multi-objective optimization technique; and
iteratively perform a plurality of steps for a predefined number of iterations, wherein the plurality of steps comprise:

compute a fitness value associated with each of the plurality of geometric variations, wherein the fitness value is a function of a geometry fitness value, a grain size fitness value, and a force fitness value; and
generate a new set of geometric variations of the preform of the product using a plurality of selected geometric variations from among the plurality of geometric variations based on the associated fitness value, wherein the new set of geometric variations is used in subsequent iterations, and wherein a geometric variation is selected as preform design, from among the new set of geometric variations obtained after performing predefined number of iterations, based on the associated fitness value.

7. The system as claimed in claim 6, wherein the plurality of parameters comprise i) length of the product, ii) a plurality of sections $x_i$ comprised in the preform, iii) radius of each of the plurality of sections, iv) an initial grain size distribution of material of the preform, v) a target grain size distribution of material of the product, vi) strain rate for single stage hot forging, vii) a strain within the preform, viii) a forging temperature, and ix) capacity of a hot forging press.

8. The system as claimed in claim 7, wherein the geometry fitness value for a geometry of the preform, from among the plurality of geometric variations of the preform, is obtained by:

determining a complexity $C$ of the geometry as a sum of geometrical complexities of each of the plurality of sections calculated using the radius of each of the plurality of sections;
calculating a form filling error $F^x$ for each of the plurality of sections as:

$$
F^{x_i} = \begin{cases} 0, if \ \frac{A_p^{x_i}}{A_{fp}^{x_i}} < a \\ 1, if \ \frac{A_p^{x_i}}{A_{fp}^{x_i}} > (1+a) \\ -a + \frac{A_p^{x_i}}{A_{fp}^{x_i}}, if \ a \le \frac{A_p^{x_i}}{A_{fp}^{x_i}} < (1+a) \end{cases},
$$

wherein $a$ is a predefined material surplus necessary for complete die filling operation and is defined for the entire preform of the product, $A_p^{x_i}$ is area of the geometry at the section $x_i$, and $A_{fp}^{x_i}$ is the area of the product at the section $x_i$; and
determining the geometry fitness value as sum of the complexity of the geometry and the form filling error of the plurality of sections.

9. The system as claimed in claim 7, wherein the grain size fitness value for a geometry of the preform from among the plurality of geometric variations of the preform is obtained by:

calculating an effective strain at each section of the preform during hot forging into the final product;
determining dynamic recrystallization (DRX) area fraction and DRX grain size based on the calculated effective strain;
updating the initial grain size distribution based on the DRX area fraction and DRX grain size to obtain an updated grain size distribution; and
calculating a Root Mean Squared Error (RMSE) between the updated grain size distribution and the target grain size distribution, wherein the calculated error is the grain size fitness value.

10. The system as claimed in claim 7, wherein the force fitness value for a geometry of the preform from among the plurality of geometric variations of the preform is obtained by:

computing a forging force necessary to transform the geometry of the preform into the final product based on i) a flow stress ($y_f$), ii) contact area $(A)$, and iii) coefficient of friction ($\mu$) between die of the hot forging press and material of the preform, wherein the flow stress is determined based on the forging temperature, the strain rate for single stage hot forging, and the strain within the preform, and wherein the contact area is calculated by multiplying the length of the product and width between the preform and the die of the hot forging press; and
determining variance between the computed forging force and the capacity of the hot forging press, wherein the determined variance serves as the force fitness value.

11. One or more non-transitory machine-readable information storage mediums comprising one or more instructions which when executed by one or more hardware processors cause:

obtaining a plurality of parameters of a preform of a product and a single stage hot forging press;
generating a plurality of geometric variations of the preform of the product based on the plurality of parameters using a multi-objective optimization technique; and

iteratively performing a plurality of steps for a predefined number of iterations, wherein the plurality of steps comprise:

computing a fitness value associated with each of the plurality of geometric variations, wherein the fitness value is a function of a geometry fitness value, a grain size fitness value, and a force fitness value; and generating a new set of geometric variations of the preform of the product using a plurality of selected geometric variations from among the plurality of geometric variations based on the associated fitness value, wherein the new set of geometric variations is used in subsequent iterations, and wherein a geometric variation is selected as preform design, from among the new set of geometric variations obtained after performing predefined number of iterations, based on the associated fitness value.

12. The one or more non-transitory machine-readable information storage mediums as claimed in claim 11, wherein the plurality of parameters comprise i) length of the product, ii) a plurality of sections $x_i$ comprised in the preform, iii) radius of each of the plurality of sections, iv) an initial grain size distribution of material of the preform, v) a target grain size distribution of material of the product, vi) strain rate for single stage hot forging, vii) a strain within the preform, viii) a forging temperature, and ix) capacity of a hot forging press.

13. The one or more non-transitory machine-readable information storage mediums as claimed in claim 12, wherein the geometry fitness value for a geometry of the preform, from among the plurality of geometric variations of the preform, is obtained by:

determining a complexity C of the geometry as a sum of geometrical complexities of each of the plurality of sections calculated using the radius of each of the plurality of sections;
calculating a form filling error $F^x$ for each of the plurality of sections as:

$$F^{x_i} = \begin{cases} 0, if\ \dfrac{A_p^{x_i}}{A_{fp}^{x_i}} < a \\[2em] 1, if\ \dfrac{A_p^{x_i}}{A_{fp}^{x_i}} > (1+a) \\[2em] -a + \dfrac{A_p^{x_i}}{A_{fp}^{x_i}}, if\ a \le \dfrac{A_p^{x_i}}{A_{fp}^{x_i}} < (1+a) \end{cases},$$

wherein $a$ is a predefined material surplus necessary for complete die filling operation and is defined for the entire preform of the product, $A_p^{x_i}$ is area of the geometry at the section $x_i$, and $A_{fp}^{x_i}$ is the area of the product at the section $x_i$; and
determining the geometry fitness value as sum of the complexity of the geometry and the form filling error of the plurality of sections.

14. The one or more non-transitory machine-readable information storage mediums as claimed in claim 12, wherein the grain size fitness value for a geometry of the preform from among the plurality of geometric variations of the preform is obtained by:

calculating an effective strain at each section of the preform during hot forging into the final product;
determining dynamic recrystallization (DRX) area fraction and DRX grain size based on the calculated effective strain;
updating the initial grain size distribution based on the DRX area fraction and DRX grain size to obtain an updated grain size distribution; and
calculating a Root Mean Squared Error (RMSE) between the updated grain size distribution and the target grain size distribution, wherein the calculated error is the grain size fitness value.

15. The one or more non-transitory machine-readable information storage mediums as claimed in claim 12, wherein the force fitness value for a geometry of the preform from among the plurality of geometric variations of the preform is obtained by:

computing a forging force necessary to transform the geometry of the preform into the final product based on i) a flow stress $(y_f)$, ii) contact area *(A)*, and iii) coefficient of friction $(\mu)$ between die of the hot forging press and material of the preform, wherein the flow stress is determined based on the forging temperature, the strain rate for single stage hot forging, and the strain within the preform, and wherein the contact area is calculated by multiplying the length of the product and width between the preform and the die of the hot forging press; and determining variance between the computed forging force and the capacity of the hot forging press, wherein the determined variance serves as the force fitness value.

SYSTEM <u>100</u>

MEMORY
<u>102</u>

DATABASE
<u>108</u>

GEOMETRY MODULE
<u>102A</u>

GRAIN SIZE MODULE
<u>102B</u>

FORCE MODULE
<u>102C</u>

HARDWARE
PROCESSOR(S)
<u>104</u>

I/O INTERFACE(S)
<u>106</u>

FIG. 1

200

Obtaining a plurality of parameters of a preform of a product and a single stage hot forging press — 202

Generating a plurality of geometric variations of the preform of the product based on the plurality of parameters using a multi-objective optimization technique — 204

Iteratively performing a plurality of steps for a predefined number of iterations, wherein the plurality of steps comprise: — 206

Computing a fitness value associated with each of the plurality of geometric variations, wherein the fitness value is a function of a geometry fitness value, a grain size fitness value, and a force fitness value — 206A

Generating a new set of geometric variations of the preform of the product using a plurality of selected geometric variations from among the plurality of geometric variations based on the associated fitness value, wherein the new set of geometric variations is used in subsequent iterations, and wherein a geometric variation is selected as preform design, from among the new set of geometric variations obtained after performing predefined number of iterations, based on the associated fitness value — 206B

FIG. 2

FIG. 3

GEOMETRY MODULE

Form-filling function

Multi-objective optimization technique

Preform geometry variation

Complexity function

Geometry fitness value

FIG. 4

$l_1$  $l_2$  $l_3$  $l_4$  $l_{n-3}$  $l_{n-2}$  $l_{n-1}$

$X_1$  $X_2$  $X_3$  $X_4$  $X_{n-2}$  $X_{n-1}$  $X_n$

FIG. 5

Multi-objective optimization technique — Grain size fitness value

Preform geometry variation

**GRAIN SIZE MODULE**

Calculate effective strain, DRX grain size and DRX volume fraction for each section

Update grain size distribution

RMSE between updated grain size distribution and target grain size distribution

FIG. 6

Grain Size 1  Grain Size 2  Grain Size 3  Grain Size 4  Grain Size $X_{n-2}$  Grain Size $X_{n-1}$  Grain Size $X_n$

$X_1$  $X_2$  $X_3$  $X_4$  $X_{n-2}$  $X_{n-1}$  $X_n$

FIG. 7

```
                          ┌─────────────────┐
                          │  Multi-objective │    Force fitness value
                          │   optimization   │◄──────────────────┐
                          │    technique     │                   │
                          └─────────────────┘                   │
      Preform geometry variation    │                           │
  ┌ ─ ─ ─ ─ ─ ─ ─ ─ ─ ─ ─ ─ ─ ─ ┼ ─ ─ ─ ─ ─ ─ ─ ─ ─ ─ ─ ┐ │
  │ FORCE MODULE                   │                          │ │
  │                                ▼                          │ │
  │  ┌──────────────────────────────────────────────────┐    │ │
  │  │            Calculate forging force                 │    │ │
  │  └──────────────────────────────────────────────────┘    │ │
  │                                │                          │ │
  │                                ▼                          │ │
  │  ┌──────────────────────────────────────────────────┐    │ │
  │  │  Determine variance between the computed            │    │ │
  │  │ forging force and the capacity of the hot forging   │    │ │
  │  │                    press                            │    │ │
  │  └──────────────────────────────────────────────────┘    │ │
  └ ─ ─ ─ ─ ─ ─ ─ ─ ─ ─ ─ ─ ─ ─ ─ │ ─ ─ ─ ─ ─ ─ ─ ─ ─ ─ ─ ┘ │
                                   └──────────────────────────┘
```

FIG. 8

FIG. 9A

FIG. 9B

FIG. 10A

FIG. 10B

FIG. 10C

FIG. 10D

FIG. 10E

Final product

Preform

FIG. 11A

Sections

FIG. 11B

FIG. 12A

FIG. 12B

FIG. 12C

Europäisches
Patentamt

European
Patent Office

Office européen
des brevets

# EUROPEAN SEARCH REPORT

**Application Number**

EP 25 19 6482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KODIPPILI THARINDU ET AL: "Multi-objective optimization of a cast-preform shape for a magnesium alloy forging application", THE INTERNATIONAL JOURNAL OF ADVANCED MANUFACTURING TECHNOLOGY, vol. 129, no. 7-8, 24 October 2023 (2023-10-24), pages 3221-3232, XP037949349, DOI: 10.1007/S00170-023-12478-8 * the whole document * * abstract * * section 3.1 * * section 3.3 * * figures 2,3 * ----- | 1-15 | INV. G06F30/17 |
| Y | HAN BYEONGCHAN ET AL: "Preform design to reduce forging load and grain size simultaneously in disk forging of IN718", JOURNAL OF MATERIALS RESEARCH AND TECHNOLOGY, vol. 31, 21 June 2024 (2024-06-21), pages 1644-1654, XP093355228, BR ISSN: 2238-7854, DOI: 10.1016/j.jmrt.2024.06.104 * the whole document * * abstract * * section 2.1 * * equations (1) to (8) * ----- -/-- | 1-15 | |

| | | | TECHNICAL FIELDS SEARCHED (IPC) |
|---|---|---|---|
| | | | G06F |

The present search report has been drawn up for all claims

| Place of search | Date of completion of the search | Examiner |
|---|---|---|
| Munich | 20 January 2026 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 19 6482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Khalaf Hassanein Ibraheem: "Chapter Seven: Metal Forming -Forging", , 31 December 2016 (2016-12-31), pages 1-20, XP093355724, Retrieved from the Internet: URL:https://un.uobasrah.edu.iq/lectures/13845.pdf * the whole document * * equations (7.2) to (7.5) * * page 13 * ----- | 1-15 | |
| A | KNUST JOHANNES ET AL: "Preform optimization for hot forging processes using genetic algorithms", THE INTERNATIONAL JOURNAL OF ADVANCED MANUFACTURING TECHNOLOGY, vol. 89, no. 5, 29 July 2016 (2016-07-29), pages 1623-1634, XP036186302, DOI: 10.1007/S00170-016-9209-9 * the whole document * * abstract * * equations (6) and (13) * ----- | 1-15 | TECHNICAL FIELDS SEARCHED (IPC) |

The present search report has been drawn up for all claims

| Place of search | Date of completion of the search | Examiner |
|---|---|---|
| Munich | 20 January 2026 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 703 953 A1**

**Patent documents cited in the description**

- IN 202421065326